Europäisches Patentamt

European Patent Office

Office européen des brevets

(11) Publication number: **0 280 836**
**A2**

## (12) EUROPEAN PATENT APPLICATION

(21) Application number: **87830252.0**

(22) Date of filing: **02.07.87**

(51) Int. Cl.⁴: **H01R 27/00**

(30) Priority: **03.03.87 IT 2100087 U**

(43) Date of publication of application:
**07.09.88 Bulletin 88/36**

(84) Designated Contracting States:
**BE CH DE ES FR GB LI NL SE**

(71) Applicant: **Apostolo, Carlo**
**Via Marcellino, 25**
**I-22055 Merate (Como)(IT)**

(72) Inventor: **Apostolo, Carlo**
**Via Marcellino, 25**
**I-22055 Merate (Como)(IT)**

(74) Representative: **Cicogna, Franco**
**Ufficio Internazionale Brevetti Dott.Prof.**
**Franco Cicogna Via Visconti di Modrone,**
**14/A**
**I-20122 Milano(IT)**

(54) **A conductor assembly for connection to electrical switches, modular electrical apparatus and the like.**

(57) A conductive bar structure suitable for connection to electrical switches or other modular electrical apparatus has two or more electrically conductive strips (1) housed in an elongate insulating casing (3) having an opening along one side which is closable by a removable cover (5) in which are formed a plurality of longitudinal slots (6) the length of which is parallel to the length of the casing. Within the casing (3) there are a plurality of longitudinally extending insulating partitions (10) defining guide channels (2) in which the bars (1) are housed so as to be separated and insulated from one another.

Each bar (1) has a plurality of lateral projections (7) lying in a plane parallel to but offset from the general plane of the bar (1) itself, the degree of offset being determined by the channel in which the bar (1) is intended to be fitted so that the projections can extend through the slots in the cover. Unwanted projections can be removed at a convenient weakened line at the root of the projection.

Fig.1

### "A conductor assembly for connection to electrical switches, modular electrical apparatus and the like"

The present invention relates to a conductor assembly comprising several conductive strips or bars in a common insulating housing for connection to electrical switches, modular electrical apparatus and the like.

Such connector assemblies often called connector bars, are currently widely used as conductors for services and as distribution lines for industrial installations. It is often required to make branching connections to such connector bars but conventional connector supply bars until now used in commerce do not have means by which this can be achieved readily whilst maintaining the required degree of protection demanded by the current rules of unification. Known connector bars thus have limitations of a functional type. In particular, depending on the installation to which the connector bar is to be fitted, it has to be made specifically as a bipolar, tripolar, or quadripolar connector and there is no convenient way in which a connector bar, once made, can be changed, or in which a connector bar can be modified after it has been put into service if the operating conditions should change. Likewise, when using a conventional connector bar made, for example for three phase use, it is not possible to eliminate one of the conductors to make it subsequently suitable for single-phase use.

Further, connector bars currently in use only have means for connecting the supply in parallel to one or more branches with a consequent limitation on the distribution capacity.

The object of the present invention is that of eliminating the above-indicated disadvantages by providing a connector bar structure for the supply of electrical switches, modular electrical apparatus or the like, to which the electrical supply can be connected both to the ends of each individual bar or to the branches of the conductive bars themselves.

According to the present invention, there is provided a conductive bar structure for connection to electrical switches or modular electrical apparatus, characterised in that it comprises two or more electrically conductive strips or bars housed in an elongate insulating casing which is open along one side and closable by a removable cover having a plurality of slots lying parallel to its longitudinal axis, the said bars being separated from one another within the casing by longitudinally extending insulating partitions defining guide channels within which the bars are lodged, and each bar having a plurality of lateral projections lying in a plane parallel to the general plane of the bar itself, the said projections being selectively removable from the associated bar and being spaced from one another along the bar by the same spacing as that between adjacent longitudinal slots in the said cover.

A particular advantage of the present invention is that it provides a conductive bar structure for the electrical supply of switches and modular electrical apparatus which can be produced in bipolar, tripolar, or quadripolar form as desired.

Another advantage of the present invention is that it provides a conductive bar structure for the electrical supply of switches and modular electrical apparatus, in which the branches can have a selected polarity sequence, and in which changes in polarity are possible.

One embodiment of the present invention will now be more particularly described by way of example, with reference to the accompanying drawings, in which:

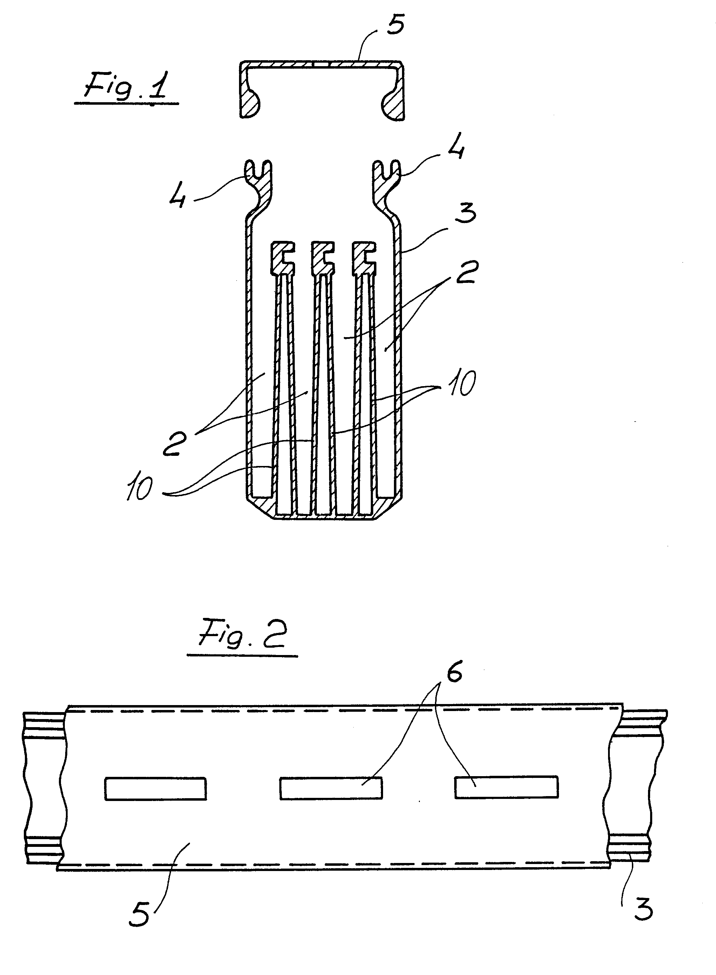

Figure 1 is a cross-section of the casing for the conductive strips or bars and the associated cover;

Figure 2 is a plan view from above of a portion of the said casing with the cover in position;

Figure 3 is a side view and an end view showing several different conductive strips or bars which can be introduced into channels in the said casing.

With reference now to the various Figures of the attached drawings, the connector bar structure for the supply of electrical switches or modular electrical apparatus constituting the subject of the present invention comprises two or more rectilinear conductive strips or bars 1 intended to be housed in corresponding adjacent channels 2 defined by a casing 3 in the form of an elongate member open along one side. The casing 3 has two sides provided with enlarged edges 4 shaped in such a way as to be able to snap-engage a cover 5 along the longitudinal axis of which are formed a plurality of regularly spaced axially extending slots 6.

The said strips or bars have a plurality of projections 7 extending in a regularly spaced array from one side. The ends 8 of the said projections 7 are suitably shaped and their spacing is correlated to the spacing of the slots 6. Likewise the width of each lateral projection 6 is such that it can project through a slot 6 to enable an electrical connection to be made thereto.

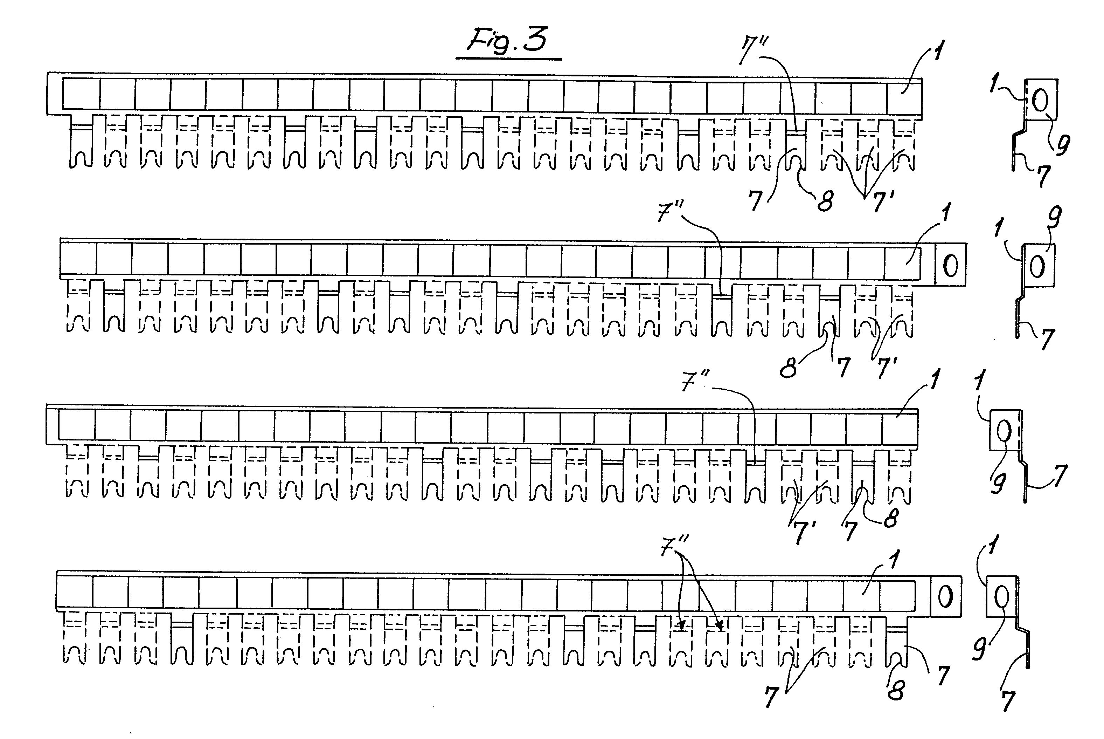

As can be seen in the end views of Figure 3 the projections 7 are offset slightly from the general plane of the strip or bar 1 itself by a different amount for each bar 1 to correspond to the lateral spacing of a respective channel 2 of the casing from the longitudinal centre line at which the slots 6 are located, and each projection 7 has a weakened line 7″ close to its root to allow any unwanted projections to be broken off easily. This weakened, pre-fracture line 7″ is not so weak as to jeopardise the normal working of the connector, however.

In use of the connector bar the said casing 3 receives two, three or four conductive strips or bars 1 according as it is desired to provide a bipolar, tripolar, or quadripolar distribution structure. As can be seen in Figure 3 any unwanted projections can be removed easily and the surplus connections which have been removed are indicated in Figure 3 in broken outline and identified with the reference numeral 7′.

Some of the strips or bars 1 have a connector tab 9 at one end for connection to an electrical supply, although it will be appreciated that electrical supply may be equally well made by connection to one of the lateral projections 7 either instead of or as well as connection to a terminal tab 9 at the end. This allows higher ratings to be achieved without overheating.

## Claims

1. A conductive bar structure for connection to electrical switches or modular electrical apparatus, characterised in that it comprises two or more electrically conductive strips or bars (1) housed in an elongate insulating casing (3) which is open along one side and closable by a removable cover (5) having a plurality of slots (6) lying parallel to its longitudinal axis, the said bars (1) being separated from one another within the casing (3) by longitudinally extending insulating partitions (10) defining guide channels (2) within which the bars (1) are lodged, and each bar (1) having a plurality of lateral projections (7) lying in a plane parallel to the general plane of the bar (1) itself, the said projections (7) being selectively removable from the associated bar (1) and being spaced from one another along the bar (1) by the same spacing as that between adjacent longitudinal slots (6) in the said cover (5).

2. A conductive bar structure according to Claim 1, characterised in that it includes two or more rectilinear bars (1) housed in corresponding adjacent channels (2) defined by the said insulating partitions (10), the casing (3) having two longitudinal side walls the edge portions (4) of which are of greater thickness than the side walls themselves and shaped so as to snap-engage the said cover (5) to retain it in position on the casing (3).

3. A conductive bar structure according to Claim 1 or Claim 2, characterised in that the said projections (7) of the said bars (1) are each provided with a weakened line (7″) along which the

projection (7) can be broken readily from the bar (1) whereby to prepare bars having selectively retained projections extending through selected slots (6) in the cover (5).

4. A conductive bar structure according to any preceding Claim, characterised in that each said bar (1) has a tab (9) at least at one end for connection to a source of electrical supply.

_Fig.1_

_Fig.2_

Fig. 3